# EUROPÄISCHE PATENTSCHRIFT

(11) **EP 1 954 745 B1**
(45) Veröffentlichungstag und Bekanntmachung des Hinweises auf die Patenterteilung: **08.08.2012**
(21) Anmeldenummer: 06828869.5
(22) Anmeldetag: 26.10.2006
(51) Int. Cl.: C08J 5/04, D06M 15/41, D06M 15/55, D06M 15/693

(54) **HAFTMITTELFORMULIERUNG, VERFAHREN ZUR HERSTELLUNG SOWIE DESSEN VERWENDUNG**
ADHESIVE FORMULATION, METHOD FOR THE PRODUCTION THEREOF, AND USE THEREOF
FORMULATION D'AGENT ADHÉSIF, PROCÉDÉ DE FABRICATION ET UTILISATION

(30) Priorität: 31.10.2005 DE 102005052025
(43) Veröffentlichungstag der Anmeldung: 13.08.2008
(73) Patentinhaber: EMS-CHEMIE AG, 7013 Domat-Ems (CH)
(72) Erfinder: KURZ, Günter, CH-7015 Tamins (CH); SENN, Manuel, CH-7000 Chur (CH)
(74) Vertreter: Pfenning, Meinig & Partner GbR
(86) Internationale Anmeldenummer: PCT/EP2006/010333
(87) Internationale Veröffentlichungsnummer: WO 2007/051562

(56) Entgegenhaltungen:
- EP-A- 1 221 456
- EP-A2- 0 695 793
- JP-A- 2000 008 280
- US-A1- 3 503 845

## Beschreibung

Die Erfindung betrifft eine Haftmittelformulierung zur Behandlung von Verstärkungseinlagen die zur Herstellung von verstärkten Polymerprodukten vorgesehen sind, wobei die Haftmittelformulierung gelöstes Epoxid enthält.

Bei der Herstellung von faserverstärkten Gummiprodukten hat es sich als günstig erwiesen, wenn zur Verbesserung der Haftfestigkeit zwischen textiler Verstärkungseinlage und dem Kautschuk ein Haftvermittler eingesetzt wird. Wichtig ist der Einsatz eines derartigen Haftvermittlers insbesondere im Bereich von Reifencord und anderen hochbelasteten Verbundwerkstoffen mit Verstärkungsfasern. Insbesondere für dieses Anwendungsgebiet ist es aus dem Stand der Technik bekannt, Resorcin-Formaldehyd-Latexsysteme (RFL) zur Verbindung von synthetischen Fasern zu Gummiprodukten einzusetzen.

Es kann dabei entweder in einem Einschritt- oder in einem Zweischrittverfahren vorgegangen werden. In der Praxis hat es sich gezeigt, dass im Wesentlichen insbesondere bei nicht aktivierten Polyesterfasern nur das Zweischrittverfahren zu befriedigenden Ergebnissen führt. Beim Zweischrittverfahren wird in einer ersten Stufe zuerst eine Aktivierung der Fasern in der Weise vorgenommen, dass diese mit Epoxid und/oder mit Isocyanat beschichtet werden. Dies wird im Regelfall mit einer wässrigen Dispersion erreicht, bei der das Isocyanat und/oder das Epoxid mit einem bestimmten Festkörpergehalt in der wässrigen Dispersion enthalten ist. Nachgelagert zu dieser ersten Stufe wird dann in einer zweiten Stufe die Beschichtung mit einem Resorcin-Formaldehyd-Latexsystem vorgenommen. Durch dieses Zweischrittverfahren wird sichergestellt, dass im ersten Schritt eine vollständige Aktivierung der Fasern in der Weise erfolgt, dass die Beschichtung mit Epoxid und/oder mit Isocyanat zur Bildung von aktiven funktionsfähigen Gruppen an der Oberfläche der Faser führt, so dass dann mit der zweiten Stufe die Behandlung mit dem Latex erfolgen kann. Die Behandlung mit RFL erfolgt ebenfalls mit einer wässrigen Dispersion.

Das Zweischrittverfahren ist jedoch verfahrenstechnisch aufwendig und auch die Bereitstellung von zwei getrennten Dispersionen und deren Handhabung ist schwierig.

Es hat deshalb nicht an Versuchen gefehlt, die Behandlung in Form eines Einstufenprozesses durchzuführen. Einstufensysteme sind z.B. in der US 2002/0122938 sowie in der US 3,419,450 beschrieben. Die Einstufensysteme, d. h. die Anwendung einer wässrigen Dispersion mit RFL sowie Epoxid und Isocyanat, konnte sich aber in der Praxis, auch für die Behandlung von bereits aktivierten Fasern, nicht durchsetzen. Aktivierte Fasern sind Fasern, die bereits nach der Herstellung mit einer Beschichtung, z. B. einer Epoxidbeschichtung versehen worden sind. Bei Einstufenprozessen werden nun diese so vorher aktivierten Fasern wiederum mit einer Dispersion behandelt. In dem U.S.-Patent 2002/0122938 wird dabei vorgeschlagen, ein Einstufensystem zu verwenden, welches neben RFL und Isocyanat auch spezielle Epoxide enthält. Das Epoxid ist aber auch bei der US 2002/0122938 in Form eines Festkörpers in der Dispersion enthalten. Nachteil bei diesem Einstufensystem ist, dass es nicht auf nicht aktivierte Fasern angewandt werden kann und dass auch die Ergebnisse bei bereits aktivierten Fasern, insbesondere in Bezug auf die Benetzung und die Haftung unbefriedigend sind.

Ausgehend hiervon ist die Aufgabe der vorliegenden Erfindung eine Haftmittelformulierung, die in Form eines Einstufensystems angewandt werden kann vorzuschlagen, wobei die Haftmittelformulierung eine gute Benetzung und gute Haftung wie auch eine hohe Reaktionsgeschwindigkeit auf nicht aktivierten Fasern, insbesondere PET-Fasern aufweisen soll. Eine weitere Aufgabe der vorliegenden Erfindung ist es, ein entsprechendes Verfahren zur Herstellung einer derartigen Formulierung vorzuschlagen und die Verwendung anzugeben.

Die Aufgabe in Bezug auf die Haftmittelformulierung wird durch die Merkmale des Patentanspruches 1, in Bezug auf das Verfahren durch die Merkmale des Patentanspruches 11 gelöst. Die Unteransprüche zeigen vorteilhafte Weiterbildungen auf.

Erfindungsgemäß wird somit eine Haftmitteldispersion für ein Einstufensystem zur Behandlung von Verstärkungseinlagen zur Herstellung von verstärkten Polymerprodukten vorgeschlagen, bei der das Epoxid in gelöster Form mit einer Konzentration von 0.001 bis 5 mol bezogen auf 1000g der Gesamtformulierung enthalten ist, wohingegen das Isocyanat und der RFL weiterhin als Festkörper vorliegen. Die Anmelderin konnte zeigen, dass es mit einer derartigen Formulierung, bei der das Epoxid in gelöster Form vorliegt möglich ist, mit einem Einstufensystem zu arbeiten und gleichzeitig die Vorteile des bisherigen Zweistufensystems, nämlich die Selektivität in Bezug auf die Beschichtung zu erreichen. Die erfindungsgemäße Haftmittelformulierung führt aber nicht nur zu einer selektiven Benetzung, d.h. es findet zuerst eine Aktivierung der Faser statt und dann nachfolgend eine Beschichtung mit in der Dispersion enthaltenen Festkörpern, sondern mit der Haftmittelformulierung nach der Erfindung wird weiterhin eine ausgezeichnete Haftung von unbehandelten Polyestercorden zum Gummi erreicht. Es hat sich weiterhin gezeigt, dass mit der erfindungsgemäßen Formulierung eine verringerung der Penetrationstiefe eintritt, so dass die Konzentration an Haftvermittler gesenkt werden konnte. Dies hat zur Folge, dass die beschichteten Corde weniger Steifigkeit aufweisen und daher eine bessere Stabilität besitzen.

Bei der Haftmittlerformulierung nach der Erfindung ist es dabei bevorzugt, wenn die Konzentration des Epoxids 0.002 bis 0.2 mol/1000g der Gesamtformulierung beträgt. Geeignete Epoxide, die sich in der Dispersion lösen, sind solche die ein Molekulargewicht von 50 bis 290 aufweisen: Insbesondere bevorzugt sind wasserlösliche Polyglycidylether, Epoxy-Novolak-Harze, polyfunktionelle Alkylenepoxide, Diglycidether und Bisphenol-A auf basierenden Harzen. Die 1 221 456 A1 beschreibt Epoxide.

Die Haftmittelformulierung nach der Erfindung weist einen Festkörpergehalt von 1 bis 50 Gewichts-%, bevorzugt von 1 bis 30 Gewichts-% auf. Die Partikelgröße der in der Dispersion vorliegenden Teilchen, d.h. des Isocyanats ist <5 µm.

Der Festkörperanteil der Dispersion setzt sich dabei aus 0,1 bis 20 Gew.-% des Isocyanats und 0,1 bis 40 Gew.-% des RFL zusammen. Bevorzugt enthält die Formulierung 0,1 bis 10 Gew. -% Isocyanat und und 10 bis 25 Gew.-% RFL als Festkörperanteil.

Bei der Haftmittelformulierung hat es sich weiterhin als vorteilhaft erwiesen, wenn als Isocyanate 4-4-diisocyanatdiphenylmethan (MDI) und/oder Tuluoldiiso cyanat (TDI) und/oder Naphthylisocyanat (MDI) verwendet werden. Die Erfindung umfasst aber selbstverständlich auch alle anderen bekannten Isocyanate, die für derartige Haftvermittlerformulierungen eingesetzt werden können. Hierzu wird beispielhaft auf die US 2002/0122938 A1 und die dort beschriebenen Diisocyanate verwiesen.

Als günstiges Blockierungsmittel haben sich bei den Isocyanaten, bei der vorliegenden Erfindung, insbesondere lactamblockierte Isocyanate erwiesen. Beispiele hierfür sind ε-copralactam, d-Valerolactam. Die Erfindung umfasst aber selbstverständlich auch andere bekannte Blockierungsmittel. Diese sind: Oxime, z.B. Methyl-Ethyl-Ketoxim (Butanon-Oxim), Methyl-Amyl-Ketoxim und Cyclohexanon-Oxim. Monophenole, z.B. Phenol, Resorcin, Kresol, Trimethylphenole, tert. Butylphenole. Primäre, sekundäre und tertiäre Alkohole, Glykolether, leicht enol-bildende Verbindungen, wie z.B. Acetoessigester, Acetylaceton, Malonsäurederivate. Sekundäre aromatische Amine. Imide, Mercaptane, Triazole.

Eine weitere Steigerung der Reaktionsgeschwindigkeit bei der erfindungsgemäßen Haftmittelformulierung kann noch dadurch erreicht werden, dass ein Katalysator in Form einer Metallverbindung zugesetzt wird. Als Katalysator eignen sich dabei Metallverbindungen der Metalle Natrium, Kalium, Cäsium, Strontium, Silber, Cadmium, Barium, Cer, Uran, Titan, Chrom, Zinn, Antimon, Mangan, Eisen, Kolbalt, Nickel, Kupfer, Zink, Blei, Calzium und/oder Zirkon. Bevorzugt sind bei den Metallverbindungen diejenigen des Zinks. Geeignete Verbindungen sind hierbei Zinkacetat, Zinksulfat, Zinkcarbonat, Zinkoxid, Zinkacetylacetonat, und/oder Zinkchlorid. Ganz besonders bevorzugt ist zinkacetat. Der Katalysator liegt in gelöster Form in der Dispersion vor, wobei die Konzentration 0.0001 bis 0.1 mol/1000g der Formulierung beträgt.

Das gemäß der vorliegenden Erfindung verwendete Resorcin-Formaldehyd-Latexsystem (RFL) ist an und für sich aus dem Stand der Technik bekannt.

Die Erfindung betrifft weiterhin ein Verfahren zur Behandlung von Verstärkungseinlagen zur Herstellung von verstärkten Polymerprodukten (Patentanspruch 11). Beim erfindungsgemäßen Verfahren wird eine wie vorstehend beschriebene Haftmittelformulierung eingesetzt. Beim Verfahren kann dabei die Haftmittelformulierung auch kurz vor der vorgesehenen Anwendung durch Mischen der einzelnen Komponenten hergestellt werden. In welcher Form die einzelnen Komponenten vorliegen, spielt dabei keine Rolle, d.h. es können auch zwei oder mehrere Komponenten vorgemischt werden.

Wesentlich bei der vorliegenden Erfindung ist es jedoch, dass die Haftmittelformulierung in Form eines Einstufensystems angewandt wird, d. h. alle Komponenten müssen vor der Behandlung schon in Form einer wässrigen Dispersion und/oder Lösung vorliegen. Inwieweit die wässrige Dispersion schon längere Zeit vor der Anwendung als eine einheitliche Formulierung bereitgestellt wird, oder ob die einzelnen Komponenten kurz vor der Anwendung vermischt worden sind, ist für den erzielten Erfolg unwesentlich.

Die Anmelderin konnte weiterhin zeigen, dass die erfindungsgemäße Haftmittelformulierung besonderes geeignet ist für die Behandlung von unbehandelten Polyesterfasern. Hierbei konnten ausgezeichnete Reaktionsgesehwindigkeiten, die deutlich über denen liegen, wie Sie bisher von vergleichbaren Systemen bekannt waren, erreicht werden, wobei gleichzeitig eine gute Benetzungsrate erreicht worden ist.

Die Erfindung wird nachfolgend anhand eines Ausführungsbeispiels näher erläutert.

### Beispiel:

Es wurde ein erfindungsgemäßer Dip mit der in Tabelle 1 aufgeführten Zusammensetzung hergestellt.

**Tabelle 1: Rezeptur des Einstufendips**

| Dipkomponente | Menge | Festkörper | |
|---|---|---|---|
| Lactam blockiertes MDI | 29.35 g | 29.35 g | 5.87 % |
| Polyglycidylether ¹ | 10.65 g | 10.65 g | 2.13 % |
| RFL | 260.87 g | 60.00 g | 12.00 % |
| Wasser deionisiert | 199.13 g | - | - |
| Total | 500.00 g | 1100.00 g | 20.00 % |

| | | | |
|---|---|---|---|
| ¹liegt in gelöster Form vor. ²23 % in deionisiertem Wasser | | | |

Ein nicht aktivierter PET-Cord wurde einmal mit einem Zweistufendip des Standes der Technik und mit einem erfindungsgemäßen Dip mit der in Tabelle 1 angegebenen Zusammensetzung behandelt. Beim Zweistufendip wurde ein Dip des Standes der Technik eingesetzt. Im ersten Dip wurde als geblocktes Isocyanat Grilbond® IL-6 50%F und als Epoxid Grilbond® G1701 der Firma EMS-Primid AG, Schweiz eingesetzt. Bei der Dispersion für die 2. Stufe handelt es sich um ein Kondensationsprodukt aus einem Resorcin-Formaldehyd-Harz und einem Butadienstyrenvinylpyridinlatex.

In Tabelle 2 sind die Ergebnisse für die beiden Dips gegenüber gestellt.

**Tabelle 2:**

| | | Zweistufendip | Einstufendip |
|---|---|---|---|
| Rezept | IL-6 + G1701 | 2.7 %¹ | 1.7 %¹ |
| | RFL | 6.3 %¹ | 5.8 %¹ |
| Eigenschaften | Haftung² | 5 | 5 |

| | | | |
|---|---|---|---|
| ¹ DPU: Menge Haftvermittler auf dem PET nach Beschichtung. Cord-Gummi Bedeckung: 1 = 0-20 %, 2 = 20-40 %, 3 = 40-60 %, 4 = 60-80 %, 5 = 80-100 %. | | | |

## Patentansprüche

1. Haftmittelformulierung in Form einer wässrigen Dispersion mit einer Festkörpergehalt von 1 bis 50 Gew.-% bezogen auf die gesamte Haftmittelformulierung zur Behandlung von Verstärkungseinlagen, zur Herstellung von verstärkten Polymerprodukten, enthaltend:
a) 0.001 bis 5 mol eines Epoxids mit einem Molekulargewicht von 50 bis 290 in gelöster Form, bezogen auf 1000g der Gesamtformulierung
b) 0,1 bis 20 Gew.-% eines ganz oder teilweise blockierten Isocyanates, als Festkörper sowie
c) 0,1 bis 40 Gew.-% eines Resorcin-Formaldehyd-Latex (RFL) als Festkörper,
wobei sich der Festkörperanteil aus den Komponenten b) und c) zusammensetzt und die Summe der Komponenten b) und c) maximal 50 Gew.-% beträgt.

2. Haftmittelformulierung nach Anspruch 1, **dadurch gekennzeichnet, dass** der Festkörpergehalt 5 bis 30 Gew.-% beträgt.

3. Haftvermittlerformulierung nach Anspruch 1 oder 2, **dadurch gekennzeichnet, dass** sie 0.002 bis 0.20 mol Epoxid in gelöster Form, bezogen auf 1000g der Gesamtformulierung, enthält.

4. Haftmittelformulierung nach einem der Ansprüche 1 bis 3, **dadurch gekennzeichnet, dass** das Epoxid ausgewählt ist aus der Gruppe der Polyglycidylether, Epoxy-Novolak-Harze, polyfunktionellen Alkylenepoxiden, Diglycidethern und auf Bisphenol-A basierenden Harzen.

5. Haftmittelformulierung nach einem der Ansprüche 1 bis 4, **dadurch gekennzeichnet, dass** die Formulierung 0.0001 bis 0.1 mol einer Metallverbindung als Katalysator in gelöster Form enthält, bezogen auf 1000 g der Gesamtformulierung, wobei der Katalysator ausgewählt ist aus den Metallen Zink, Strontium, Cadmium, Natrium, Cäsium, Kalium, Silber, Barium, Titan, Chrom, Zinn, Antimon, Mangan, Eisen, Kobalt, Nickel, Cer, Uran, Kupfer, Calzium, Zink, Blei und Zirkon.

6. Haftmittelformulierung nach Anspruch 5, **dadurch gekennzeichnet, dass** der Katalysator eine Zinkverbindung ausgewählt aus Zinkacetat, Zinkacetylacetonat, Zinkoxid, Zinkchlorid, Zinkcarbonat und/oder Zinksulfat ist.

7. Haftmittelformulierung nach mindestens einem der Ansprüche 1 bis 6, **dadurch gekennzeichnet, dass** das Isocyanat mit Lactam blockiert ist.

8. Haftmittelformulierung nach mindestens einem der Ansprüche 1 bis 7, **dadurch gekennzeichnet, dass** das Isocyanat ausgewählt ist aus 4,4-diisocyanat-diphenylmethan (MDI) und/oder Toluoldiisocyanat (TDI) und/oder Naphtyldiisocyanant (NDI).

9. Haftmittelformulierung nach mindestens einem der Ansprüche 1 bis 8, **dadurch gekennzeichnet, dass** sie zusätzlich Additiv- und/oder Dispergiermittel enthält.

10. Haftmittelformulierung nach mindestens einem der Ansprüche 1 bis 9, **dadurch gekennzeichnet, dass** sie 0,1 bis 10 Gew.-%, geblocktes oder teilgeblocktes Isocyanat als Festkörper und 10 bis 25 Gew.-% RFL, als Festkörper enthält.

11. Verfahren zur Behandlung von Verstärkungseinlagen, insbesondere Reifencord, zur Herstellung von verstärkten Polymerprodukten, **dadurch gekennzeichnet, dass** die Behandlung mit einer Haftmittelformulierung nach mindestens einem der Patentansprüche 1 bis 10 durchgeführt wird.

12. Verfahren nach Anspruch 11, **dadurch gekennzeichnet, dass** die Haftmittelformulierung unmittelbar vor der Behandlung durch Mischen der Einzelkomponenten hergestellt wird.

13. Verfahren nach Anspruch 11, **dadurch gekennzeichnet, dass** die Haftmittelformulierung unmittelbar vor der Anwendung durch Zumischen der Komponente c) (RFL) zu der bereits als Mischung vorliegenden Formulierung mit den Bestandteilen a) und b) hergestellt wird.

14. Verfahren nach mindestens einem der Ansprüche 11 bis 13, **dadurch gekennzeichnet, dass** nicht aktivierte Reifencord behandelt wird.

## Claims

1. An adhesive formulation in the form of an aqueous dispersion with a solids content of 1 to 50 wt.%, based on the total adhesive formulation, for treating reinforcement inserts for the production of reinforced polymer products, containing:
a) 0.001 to 5 mol of an epoxide having a molecular weight of 50 to 290 in dissolved form, based on 1000 g of the total formulation
b) 0.1 to 20 wt.% of a completely or partially blocked isocyanate as a solid and
c) 0.1 to 40 wt.% of a resorcinol formaldehyde latex (RFL) as a solid,
wherein the solids content is made up of components b) and c) and the sum of components b) and c) is no more than 50 wt.%.

2. The adhesive formulation according to claim 1, **characterised in that** the solids content is 5 to 30 wt.%.

3. The adhesive formulation according to claim 1 or 2, **characterised in that** it contains 0.002 to 0.20 mol epoxide in dissolved form, based on 1000 g of the total formulation.

4. The adhesive formulation according to one of claims 1 to 3, **characterised in that** the epoxide is selected from the group of the polyglycidyl ethers, epoxy-novolak resins, polyfunctional alkylene epoxides, diglycide ethers and bisphenol A based resins.

5. The adhesive formulation according to one of claims 1 to 4, **characterised in that** the formulation contains 0.0001 to 0.1 mol of a metal compound as catalyst in dissolved form, based on 1000 g of the total formulation, the catalyst being selected from the metals zinc, strontium, cadmium, sodium, caesium, potassium, silver, barium, titanium, chromium, tin, antimony, manganese, iron, cobalt, nickel, cerium, uranium, copper, calcium, zinc, lead and zirconium.

6. The adhesive formulation according to claim 5, **characterised in that** the catalyst is a zinc compound selected from zinc acetate, zinc acetylacetonate, zinc oxide, zinc chloride, zinc carbonate and/or zinc sulfate.

7. The adhesive formulation according to at least one of claims 1 to 6, **characterised in that** the isocyanate is blocked with lactam.

8. The adhesive formulation according to at least one of claims 1 to 7, **characterised in that** the isocyanate is selected from 4,4-diisocyanatediphenylmethane (MDI) and/or toluene diisocyanate (TDI) and/or naphtyl diisocyanante (NDI).

9. The adhesive formulation according to at least one of claims 1 to 8, **characterised in that** it additionally contains additives and/or dispersing agents.

10. The adhesive formulation according to at least one of claims 1 to 9, **characterised in that** it contains 0.1 to 10 wt.% of blocked or partially blocked isocyanate as a solid and 10 to 25 wt.% of RFL as a solid.

11. A method for treating reinforcing inserts, in particular tyre cord, for the production of reinforced polymer products, **characterised in that** the treatment is carried out with an adhesive formulation according to at least one of claims 1 to 10.

12. The method according to claim 11, **characterised in that** the adhesive formulation is produced immediately before the treatment by mixing the individual components.

13. The method according to claim 11, **characterised in that** the adhesive formulation is produced immediately before application by mixing component c) (RFL) into the formulation with components a) and b) already present as a mixture.

14. The method according to at least one of claims 11 to 13, **characterised in that** non-activated tyre cord is treated.

## Revendications

1. Formulation d'adhésif sous la forme d'une dispersion aqueuse avec une teneur en extrait sec de 1 à 50 % en poids par rapport à la formulation d'adhésif totale pour le traitement de garnitures de renforcement, pour la fabrication de produits polymères renforcés, contenant :
a) 0,001 à 5 moles d'un époxyde avec un poids moléculaire de 50 à 290 sous forme dissoute, par rapport à 1 000 g de la formulation totale
b) 0,1 à 20 % en poids d'un isocyanate complètement ou partiellement bloqué, en tant qu'extrait sec, ainsi que
c) 0,1 à 40 % en poids d'un composant de résorcine-formaldéhyde-latex (RFL) en tant qu'extrait sec,
dans laquelle la proportion d'extrait sec se compose des composants b) et c) et la somme des composants b) et c) représente au maximum 50 % en poids.

2. Formulation d'adhésif selon la revendication 1, **caractérisée en ce que** la teneur en extrait sec représente de 5 à 30 % en poids.

3. Formulation d'adhésif selon la revendication 1 ou 2, **caractérisée en ce qu'**elle contient de 0,002 à 0,20 mole d'époxyde sous forme dissoute, par rapport à 1 000 g de la formulation totale.

4. Formulation d'adhésif selon l'une quelconque des revendications 1 à 3, **caractérisée en ce que** l'époxyde est choisi dans le groupe constitué des éthers polyglycidyliques, des résines époxy novolaque, des époxydes d'alkylène polyfonctionnels, des éthers diglycidyliques et des résines à base de bisphénol A.

5. Formulation d'adhésif selon l'une quelconque des revendications 1 à 4, **caractérisée en ce que** la formulation contient de 0,0001 à 0,1 mole d'un composé métallique comme catalyseur sous forme dissoute, par rapport à 1 000 g de la formulation totale, dans laquelle le catalyseur est choisi parmi les métaux suivants : zinc, strontium, cadmium, sodium, césium, potassium, argent, baryum, titane, chrome, étain, antimoine, manganèse, fer, cobalt, nickel, cérium, uranium, cuivre, calcium, zinc, plomb et zircon.

6. Formulation d'adhésif selon la revendication 5, **caractérisée en ce que** le catalyseur est un composé de zinc choisi parmi l'acétate de zinc, l'acétylacétonate de zinc, l'oxyde de zinc, le chlorure de zinc, le carbonate de zinc et/ou le sulfate de zinc.

7. Formulation d'adhésif selon au moins l'une quelconque des revendications 1 à 6, **caractérisée en ce que** l'isocyanate est bloqué avec du lactame.

8. Formulation d'adhésif selon au moins l'une quelconque des revendications 1 à 7, **caractérisée en ce que** l'isocyanate est choisi parmi le 4,4-diisocyanate de diphénylméthane (MDI) et/ou le diisocyanate de toluène (TDI) et/ou le diisocyanate de naphtyle (NDI).

9. Formulation d'adhésif selon au moins l'une quelconque des revendications 1 à 8, **caractérisée en ce qu'**elle contient en outre un additif et/ou un dispersant.

10. Formulation d'adhésif selon au moins l'une quelconque des revendications 1 à 9, **caractérisée en ce qu'**elle contient de 0,1 à 10 % en poids d'isocyanate bloqué ou partiellement bloqué en tant qu'extrait sec et de 10 à 25 % en poids de RFL en tant qu'extrait sec.

11. Procédé pour le traitement de garnitures de renforcement, en particulier de câbles pour pneus, pour la fabrication de produits polymères renforcés, **caractérisé en ce que** le traitement est réalisé avec une formulation d'adhésif selon au moins l'une quelconque des revendications 1 à 10.

12. Procédé selon la revendication 11, **caractérisé en ce que** la formulation d'adhésif est fabriquée juste avant le traitement par mélange des composants individuels.

13. Procédé selon la revendication 11, **caractérisé en ce que** la formulation d'adhésif est fabriquée juste avant l'utilisation, en mélangeant le composant c) (RFL) à la formulation déjà existante sous la forme du composé formé par les constituants a) et b).

14. Procédé selon au moins l'une quelconque des revendications 11 à 13, **caractérisé en ce que** l'on traite des câbles pour pneus non activés.
